# EUROPÄISCHE PATENTSCHRIFT

(11) **EP 0 408 836 B1**
(45) Veröffentlichungstag und Bekanntmachung des Hinweises auf die Patenterteilung: **24.03.1993**
(21) Anmeldenummer: 90106235.6
(22) Anmeldetag: 31.03.1990
(51) Int. Cl.: B65D 88/74, F25D 17/00, B63J 2/12

(54) **Vorrichtung zur Herstellung einer gesteuerten Atmosphäre in Containern**
Device for producing a conditioned atmosphere in containers
Appareil pour constituer un milieu conditionné dans des conteneurs

(30) Priorität: 19.07.1989 DE 3923860
(43) Veröffentlichungstag der Anmeldung: 23.01.1991
(73) Patentinhaber: G + H MONTAGE GmbH, D-67059 Ludwigshafen (DE)
(72) Erfinder: Idler, Lothar, D-2050 Hamburg 80 (DE); Günther, Horst, D-2000 Hamburg 53 (DE); Günther, Susanne, D-2000 Hamburg 60 (DE); Meyer, Helmut, D-2000 Hamburg 60 (DE)
(74) Vertreter: Fleck, Thomas, Dr. Dipl.-Chem.

(56) Entgegenhaltungen:
- DE-C- 1 953 866
- PATENT ABSTRACTS OF JAPAN, Band 1, Nr. 83, Seite 1980 M77, 30. Juli 1977

## Beschreibung

Die Erfindung betrifft eine Vorrichtung zum Herstellen einer gesteuerten Atmosphäre in Containern, bestehend aus verschiedenen Gasen, die jeweils aus einer Rohrleitung zugeführt werden, mit Analyse-, Steuer- und Regulierungsvorrichtungen.

Eine solche Vorrichtung ist im Stand der Technik bekannt. Sie ist in ihrem Aufbau relativ kompliziert und aufwendig und stellt deshalb einen erheblichen Kostenfaktor dar.

Die kontrollierte Veränderung der Lagerumgebungsluft in Containern ist jedoch notwendig, damit die Lagerzeit ausgedehnt werden kann und so die Verbraucherwünsche ständig erfüllt werden können, da ein direkter bzw. physiologischer Eingriff in die Reifezeit von Früchten und dergleichen vorgenommen wird. So werden durch unsachgemäße Lagerung, insbesondere auch beim Transport, mehr als 20% aller Früchte weltweit zum Verderben gebracht, weshalb der obige Stand der Technik die Atmosphäre im Container steuert, um die genannte hohe Ausfallrate wesentlich zu verringern.

Nachteilig hat sich jedoch bei den bekannten Vorrichtungen bemerkbar gemacht, daß die Änderung von einem Gas (Gemisch) zum anderen Gas (Gemisch) relativ umständlich zu handhaben und außerdem häufig die Verwirbelung der Gase unzureichend ist, was zu Meß- und damit zu Steuerfehlern führt. Ferner ist die eingangs genannte Vorrichtung für jeden Container einzeln erforderlich, so daß man bisher davon Abstand genommen hat, sie bei einer Vielzahl von Containern einzusetzen, die in Lagerhäusern oder Schiffen übereinandergestapelt angeordnet sind. Zwar ist die Belüftung von solcher Vielzahl von Containern mittels einer Luftkühl-und/oder Heizanlage aus der DE-PS 1 953 866 oder der DE-OS 37 40 608 bekannt, jedoch gab es zahlreiche Vorbehalte gegen den Einsatz der genannten Vorrichtung bei einer solchen Luftkühl-und/ oder Heizanlage, die einerseits auf den obigen Nachteilen und andererseits auf der mit zunehmendem Arbeitsvolumen steigenden Fehlerquote beruhen. Auch hat man darüberhinaus bei einer Vielzahl von Containern ein erhöhtes Ausmaß an Gasdichtigkeitsproblemen, die vom Einsatz der eingangs genannten Vorrichtung bei den bekannten Luftkühl- und/oder Heizanlagen ablenken.

Der Erfindung liegt deshalb die Aufgabe zugrunde, die eingangs genannte Vorrichtung derart zu verbessern, daß sie leicht und schnell die Änderung von einem Gasgemisch zum anderen bei guter Verwirbelung der Gase ermöglicht und sich andererseits vorteilhafterweise bei einer Luftkühl- und/oder Heizanlage mit einem Kühl- und/oder Heizstab an den über Kupplungen mehrere Container angeschlossen sind, anschließen lässt.

Diese komplexe Aufgabe wird durch die im Anspruch 1 gekennzeichnete Vorrichtung bzw. durch die Verwendung der Vorrichtung nach einem oder mehreren der Ansprüche 1 bis 5 bei der bekannten Luft(atmosphären)kühl- und/oder Heizanlage gelöst.

Überraschenderweise ermöglicht also die Kombination von Trichter und davor angeordneter drehbarer Scheibe mit Gaseinlassbohrungen eine ausgezeichnete Handhabung und Mischung gewünschter Gase. Außerdem kann eine solche Vorrichtung bei den bekannten größeren Luftkühl- und/oder Heizanlagen eingesetzt werden, um die Atmosphäre je nach den spezifischen Forderungen zu steuern.

Weitere Vorteile und Merkmale gehen aus den vorstehenden Unteransprüchen hervor.

Im folgenden wird ein bevorzugtes Ausführungsbeispiel der erfindungsgemäßen Vorrichtung im Zusammenhang mit den Zeichnungen zum besseren Verständnis näher erläutert.

Es zeigt:
- Fig. 1: eine schematische Querschnittsansicht einer erfindungsgemäßen Vorrichtung,
- Fig. 2 und 3: Draufsichten auf die erfindungsgemäß zwischen Trichter und Grundplatte eingesetzte Scheibe,
- Fig. 4: einen schematischen Netzplan, bei der die erfindungsgemäße Vorrichtung in einer bekannten Luftkühl- und/oder Heizanlage eingebaut ist, und
- Fig. 5: eine schematische Querschnittsansicht durch die im Bereich des Ventilators der Luftkühl- und/oder Heizanlage eingebaute erfindungsgemäße Vorrichtung.

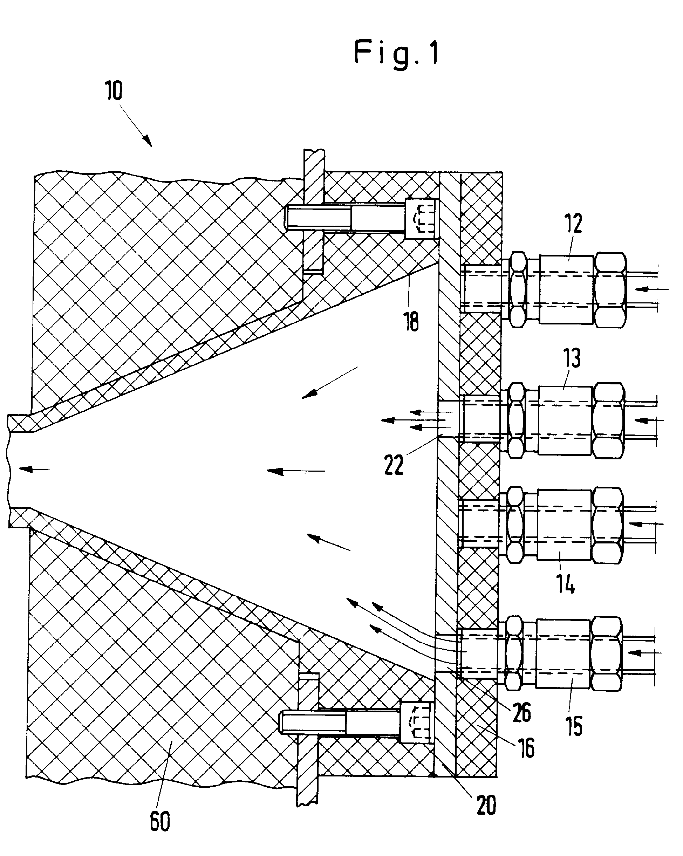

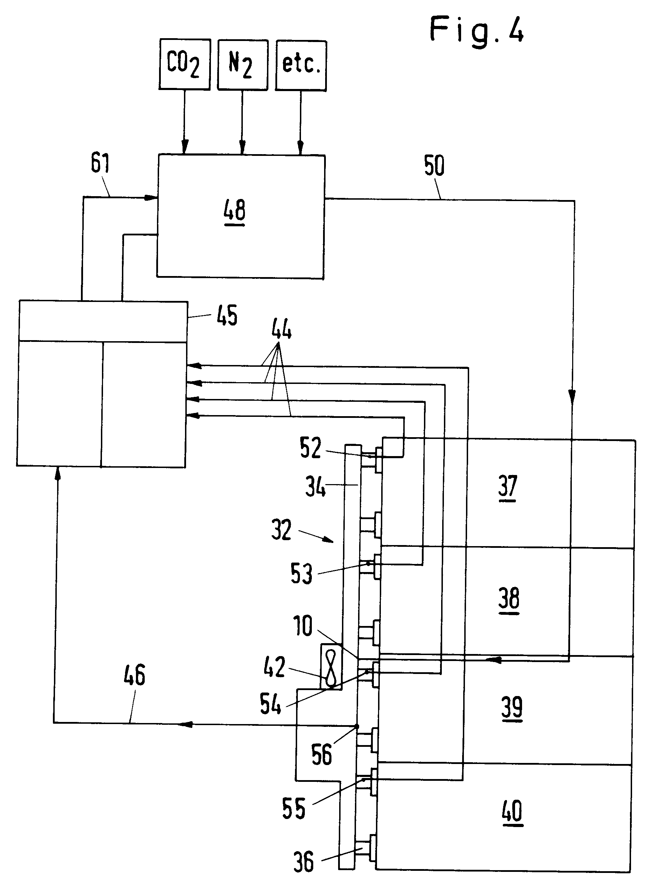

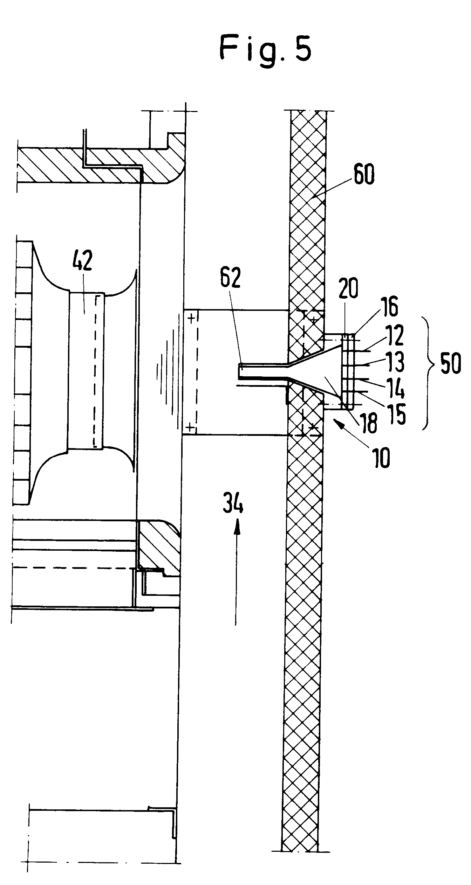

In Fig. 1 ist die erfindungsgemäße Vorrichtung zum Herstellen einer gesteuerten Atmosphäre in Containern allgemein mit 10 bezeichnet. Sie ist mit ihrem Trichter 18 in der Gehäusefrontwand 60 einer Luftkühl- und/oder Heizanlage 32 (siehe Fig. 4) eingebaut und liegt mit ihrer Auslaßöffnung 62 im Zu- bzw. Rückluftkanal 34 unmittelbar vor dem Radialventilator 42 (vgl. Fig. 5).

Aus Fig. 1 ist zu ersehen, wie vier Rohrleitungen 12, 13, 14 und 15 mittels Verschraubungen an einer Grundplatte 16 befestigt sind. Die Zahl dieser Rohrleitungen ist nicht kritisch, sondern läßt sich im beliebigen Rahmen verändern, so daß praktisch eine beliebige Anzahl unterschiedlicher Gase zur Erzielung der gewünschten Atmosphäre in den Trichter 18 einströmen können. Der besseren Übersicht halber sind diese Rohrleitungen 12 bis 15 im schematischen Netzplan der Fig. 4 der Einfachheit halber insgesamt mit 50 bezeichnet.

Von besonderer erfindungsgemäßer Bedeutung ist die Scheibe oder Ladungsscheibe 20, die zwischen der Grundplatte 16 und dem Trichter 18 angeordnet ist. Diese weist eine Vielzahl von Bohrungen auf, die einerseits ihre Befestigung am Trichter 18 und der Grundplatte 16 ermöglichen und andererseits den gewünschten Durchtritt bestimmter gewünschter Gase sicherstellt. Im vorliegenden Fall ist aus der Fig. 1 zu. sehen, wie die Bohrungen 22 und 26 mit den Enden der Rohre 13 und 15 kommunizieren, so daß aus diesen das jeweilige Gas ausströmen kann, wie dieses durch die Pfeile angedeutet wird. Die trichterförmige Konfiguration stellt erfindungsgemäß sicher, daß eine ausgezeichnete Verwirbelung der aus den unterschiedlichen Rohren stammenden Gase erfolgt, bevor diese aus der Auslaßöffnung 62 in den Kanal 34 eintreten. Aus Fig. 1 geht ferner hervor, daß die Rohre 12 und 14 auf der Scheibe 20 anliegen und keine Bohrung für sie in diesem Zustand den Durchtritt ihrer jeweiligen Gase in den Trichter 18 ermöglicht.

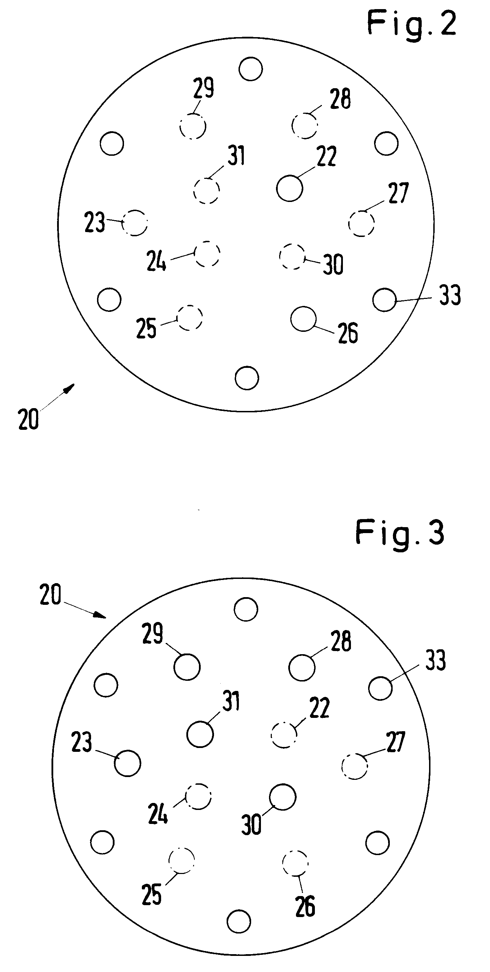

In Fig. 2 ist die sog. Ladungsscheibe 20 noch einmal in der Draufsicht gezeigt, aus der deutlich wird, daß die Bohrungen 22 und 26 mit den Enden der Rohre 13 und 15 kommunizieren, da hier ihr Kreis in durchgezogener Linie dargestellt ist, während die anderen Bohrungen 23, 24, 25, 31, 29, 28, 27 und 30 in durchbrochener Linie dargestellt sind und nicht kommunizieren. Die Bohrungen 33 auf dem äußeren Kreisring dienen lediglich zur Aufnahme von Bolzen oder Schrauben für die Befestigung am Trichter 18 und der Grundplatte 16. Nach Lösen der nichtgezeigten Befestigungsschrauben kann die Scheibe 20 leicht und schnell in eine andere Stellung gedreht werden, die dann aus der Fig. 3 ersichtlich ist. In diesem Fall sind nicht gezeigte Enden der Rohre 12 bis 15 etc. mit den Bohrungen 23, 29, 28, 30 und 31 verbunden, was durch die durchgezogenen Linien dargestellt ist, während die Bohrungen 22, 24, 27, 26 und 25 in durchbrochener Linie dargestellt sind und keinen Rohranschluß besitzen. Es dürfte einleuchten, daß die erfindungsgemäße Vorrichtung einen schnellen Wechsel von einem Gas zum anderen bzw. von einem Gasgemisch zum anderen ermöglicht.
Auch ist es dabei unerheblich, wieviele Gase zugeführt werden müssen, um die gewünschte Atmosphäre zu erzeugen, da auf der Scheibe bei entsprechendem Durchmesser jederzeit die gewünschte Anzahl von Bohrungen vorgesehen werden kann. Das gleiche gilt selbstverständlich auch für den Durchmesser der Einlaßöffnung des Trichters 18. Der gezeigte Maßstab für die Scheibe 20 beträgt 1 : 2 und läßt sich jedoch in einem breiten Rahmen variieren.

In Fig. 4 ist noch einmal eine schematische Darstellung über die verschiedenen Anschlüsse gegeben. Mit 32 ist allgemein eine bekannte "Luft"kühl- und Heizanlage bezeichnet, die einen Kühl- und Heizstab 34 umfaßt, der die übereinandergestapelten Container 37 bis 40 mit gekühlter oder geheizter Atmosphäre jeweils über Kupplungen 36 versorgt. Im Bereich des Radialventilators 42 ist die erfindungsgemäße Vorrichtung 10 angeordnet, wie dieses auch aus Fig. 5 hervorgeht. Sie wird gespeist mit verschiedenen Gasen aus der Leitung 50, bei der es sich tatsächlich um eine Vielzahl von Leitungen handelt, die jedoch der besseren Übersicht halber in Fig. 4 zusammengefaßt sind. Im Kupplungsbereich 36 weist jeder Container 37 bis 40 eine Gasprobenentnahmevorrichtung 52 bis 55 auf, eine weitere Vorrichtung 56 ist im Kühl- und Heizkanal 34 im Bereich des Ventilators 42 angeordnet. Über Leitungen 44 bzw. 46 sind diese Gasprobenentnahmevorrichtungen mit der Analysevorrichtung 45 verbunden, die ihrerseits über eine Leitung 61 mit der Steuer- und Regulierungsvorrichtung 48 in Verbindung steht, die die Art und Menge der Gase CO₂, N₂ etc. steuert und in die Vielzahl der Leitungen 50 gesteuert einspeist, so daß man die Atmosphäre in den einzelnen Containern in gewünschter Weise steuern kann.

## Patentansprüche

1. Vorrichtung zum Herstellen einer gesteuerten Atmosphäre in Containern, bestehen aus verschiedenen Gasen, die jeweils aus einer Rohrleitung zugeführt werden, mit Analyse-, Steuer- und Regulierungsvorrichtungen, dadurch gekennzeichnet, daß die Rohrleitungen (12,13,14,15) an eine gemeinsame Grundplatte (16) angeschlossen sind, die ihrerseits mit einem als Mischkammer ausgebildeten Trichter (18) in Verbindung steht, und daß eine Scheibe (20) zwischen Grundplatte (16) und der Einlaßöffnung des Trichters (18) eingesetzt ist, die eine Vielzahl von Gaseinlaß-Bohrungen (22 - 31) aufweist, die jeweils durch Drehen mit den gewünschten Enden der Rohrleitungen (12 - 15) in Verbindung bringbar sind.

2. Vorrichtung nach Anspruch 1, gekennzeichnet durch ihren Einbau bei einer Luftkühl- und/oder Heizanlage (32) mit einem Kühl- und/oder Heizstab (34), an dem über Kupplungen (36) mehrere Container (37-40) angeschlossen sind.

3. Vorrichtung nach Anspruch 2, dadurch gekennzeichnet, daß sie im Bereich des Ventilators (42) eingebaut ist.

4. Vorrichtung nach Anspruch 1, dadurch gekennzeichnet, daß die Scheibe (20) kreisrund ausgebildet ist und auf einen äußeren Kreisring mehrere Befestiungsbohrungen (33) und auf einem inneren Kreisring mehrere Gaseinlaß-Bohrungen (23, 25- 29) besitzt.

5. Vorrichtung nach Anspruch 1 und 4, dadurch gekennzeichnet, daß im mittigen Bereich der Scheibe (20) weitere Gaseinlaß-Bohrungen (22,24,30,31) vorgesehen sind.

6. Vorrichtung nach Anspruch 1 und 2, dadurch gekennzeichnet, daß im Bereich der Kupplung (36) bzw. des Anschlußstutzens für das aus dem Container austretende Gasgemisch bei jedem Container (37 - 40) und im Kühl- und/oder Heizstab (34) im Bereich des Ventilators eine Gasprobenentnahmevorrichtung (52-55 bzw. 56) vorgesehen ist, die jeweils über eine Leitung (44 bzw. 46) mit der Analysevorrichtung (45) verbunden sind, und daß eine Steuer- und Regulierungsvorrichtung (48) mit der Analysevorrichtung (45) und den Gasflaschen für CO₂, N₂ etc. einerseits und über mehrere Leitungen (50) mit der Grundplatte (16) verbunden ist.

7. Vorrichtung nach Anspruch 6, dadurch gekennzeichnet, daß die Gasprobenentnahmevorrichtung (52 - 56) in Form eines Doppelrohres ausgebildet ist und gleichzeitig ein Temperaturmeßgerät umfaßt.

8. Verwendung der Vorrichtung nach einem oder mehreren der vorstehenden Ansprüche 1 bis 7 bei einer Luftkühl- und/oder Heizanlage (32) mit einem Kühl- und/oder Heizstab (34), an den über Kupplungen (36) mehrere Container (37 - 40) angeschlossen sind, insbesondere im Bereich eines Ventilators (42).

## Claims

1. Apparatus for producing a controlled atmosphere in containers and consisting of the different gases, which are in each case supplied from a pipeline and having analytical, control and regulating means, characterized in that the pipelines (12, 13, 14, 15) are connected to a common base plate (16), which is in turn connected to a hopper (18) constructed as a mixing chamber and that a disk (20) is inserted between the base plate (16) and the inlet port of hopper (18), which has a plurality of gas intake bores (22 to 31), which can in each case be connected to the desired ends of pipeline (12 to 15) by rotating.

2. Apparatus according to claim 1, characterized by its installation in an air cooling and/or heating plant (32) with a cooling and /or heating rod (34) to which several containers (37 to 40) can be connected via couplings (36).

3. Apparatus according to claim 2, characterized in that it is fitted in the vicinity of the fan (42).

4. Apparatus according to claim 1, characterized in that the disk (20) is circular and has on an outer circular ring several fastening bores (33) and on an inner circular ring several gas intake bores (23, 25 to 29).

5. Apparatus according to claims 1 and 4, characterized in that further gas intake bores (22, 24, 30, 31) are provided in the central area of disk (20).

6. Apparatus according to claims 1 and 2, characterized in that in the vicinity of the coupling (36) or the connecting piece for the gaseous mixture passing out of the container for each container (37 to 40) and in the cooling and/or heating rod (34) in the vicinity of the fan is provided a gas sampling device (52 to 55 or 56), which are in each case connected by means of a line (44 or 46) to the analyzed (45) and that a control and regulating device (48) is connected to the analyzer (45) and the gas cylinders for CO₂, N₂, etc. on the one hand and via several lines (50) to the base plate (16) on the other.

7. Apparatus according to claim 6, characterized in that the gas sampling device (52 to 56) is constructed in the form of a double pipe and simultaneously comprises a temperature measuring device.

8. Use of the apparatus according to one or more of the claims 1 to 7 in an air cooling and/or heating plant (32) with a cooling and/or heating rod (34), to which are connected, particularly in the vicinity of a fan (42), a plurality of containers (37 to 40) via couplings (36).

## Revendications

1. Dispositif pour produire dans des conteneurs une atmosphère contrôlée, composé de différents gaz, amenés individuellement à partir d'une tuyauterie, avec des dispositifs d'analyse, de commande et de régulation, caractérisé en ce que les tuyauteries (12,13,14,15) sont raccordées à une plaque de base commune (16), reliée de son côté à un entonnoir (18), réalisé sous forme de mélange, et en ce qu'un disque (20) est inséré entre la plaque de base (16) et l'ouverture d'admission de l'entonnoir (18), disque présentant une pluralité de perçages d'introduction de gaz (22 à 31), susceptible d'être individuellement reliés, par rotation, aux extrémités souhaitées des tuyauteries (12 à 15).

2. Dispositif selon la revendication 1, caractérisé par son montage dans une installation de refroidissement et/ou de chauffage d'air (32), avec une cartouche de refroidissement et/ou de chauffage (34), à laquelle plusieurs conteneurs (37 à 40) sont raccordés par l'intermédiaire de raccords (36).

3. Dispositif selon la revendication 2, caractérisé en ce qu'il est monté dans la zone du ventilateur (42).

4. Dispositif selon la revendication 1, caractérisé en ce que le disque (20) est circulaire et présente, sur un anneau de cercle extérieur, plusieurs trous de fixation (33), et sur un anneau de cercle intérieur, plusieurs trous d'introduction de gaz (23,25 à 29).

5. Dispositif selon les revendications 1 et 4, caractérisé en ce que, dans la zone centrale du disque (20) sont prévus plusieurs trous d'introduction de gaz (22,24,30,31).

6. Dispositif selon les revendications 1 et 2, caractérisé en ce que, dans la zone du raccord (36), respectivement de la tubulure de raccordement pour le mélange de gaz sortant du conteneur, est prévu, pour chaque conteneur (37 à 40) et dans la cartouche de refroidissement et/ou de chauffage (34), dans la zone du ventilateur, un dispositif de prélèvement d'échantillons (52 à 55, respectivement 56), reliés chacun, par l'intermédiaire d'une conduite (44 respectivement 46) au dispositif d'analyse (45), et en ce qu'un dispositif de commande et de régulation (48) est relié au dispositif d'analyse (45) et aux bouteilles de gaz de CO₂, N₂ etc. d'une part et, par l'intermédiaire de plusieurs conduites (50), à la plaque de base (16).

7. Dispositif selon la revendication 6, caractérisé en ce que le dispositif de prélèvement d'échantillons (52 à 56) et réalisé sous forme d'un tube double et comprend simultanément un appareil de mesure de la température.

8. Utilisation du dispositif selon l'une ou plusieurs des revendications 1 à 7, pour une installation de refroidissement et/ou de chauffage d'air (32), avec une cartouche de refroidissement et/ou de chauffage (34), à laquelle sont raccordés, par l'intermédiaire de raccords (36), plusieurs conteneurs (37 à 40), en particulier dans la zone d'un ventilateur (42).
